# EUROPEAN PATENT APPLICATION

(11) **EP 2 677 288 A1**
(43) Date of publication of application: **25.12.2013**
(21) Application number: 12747638.0
(22) Date of filing: 16.02.2012
(51) Int. Cl.: G01J 1/02, H01L 27/14, H04N 5/33

(54) **INFRARED DETECTION SENSOR ARRAY AND INFRARED DETECTION DEVICE**

(30) Priority: 18.02.2011 JP 2011033256
(71) Applicant: NEC Corporation, Tokyo 108-8001 (JP)
(72) Inventor: MATAGA, Junichiro, Tokyo 108-8001 (JP); TAKAHASHI, Masatake, Tokyo 108-8001 (JP); SASAKI, Yasuhiro, Tokyo 108-8001 (JP); IWANAMI, Mizuki, Tokyo 108-8001 (JP)
(74) Representative: Robson, Aidan John
(86) International application number: PCT/JP2012/054339
(87) International publication number: WO 2012/111851

(57) **Abstract**

An infrared detection sensor array according to the present invention is characterized by being provided with a substrate, at least one hole that passes through the substrate, a first infrared detection element provided to one side of the substrate and a second infrared detection element provided on the other side of the substrate so as to at least partially cover the hole.

## Description

### TECHNICAL FIELD

The present invention relates to a sensor array and an infrared detection device which detect a change in spatial infrared distribution using an infrared detection element.

### BACKGROUND ART

In recent years, there is new movement toward utilizing a sensor for attaining energy saving of building air conditioning and for grasping consumer behavior due to the advancement of information and communication technology and the expansion of network infrastructure. Also, a sensitive sensor device which is small and low production cost is desired in order to realize a system utilizing a large number of sensors.

As an infrared sensor, the sensors such as a pyroelectric infrared sensor using the pyroelectric effect, a resistance change type sensor using the rate of temperature change of the resistance contained in the material, and a sensor using the electrical characteristic change in a pn junction of semiconductor are generally known.

In particular, in addition to be used for fire detection and human body detection, the pyroelectric infrared sensor which is operable in room temperature can easily create an image of infrared spatial distribution with the high resolution by arranging infrared detection elements in an array. Therefore, the pyroelectric infrared sensor can be used for ensuring safety in a dark place, flaw detection of structural material or the like.

In patent document 1, the structure of pyroelectric infrared sensor provided with a diffraction optical lens is disclosed. The infrared detection elements are arranged in an array on a substrate by film-forming process or sticking or the like, and formed as a sealed package including electrodes and wirings which perform electrical connection. And, the sealed package is provided with an optical filter through which only infrared rays having the wavelength suitable for a detection object penetrate and an diffraction optical element such as Fresnel lens for ensuring a wide viewing angle.

### PRIOR ART DOCUMENT

### PATENT DOCUMENT

Patent document 1: Japanese Patent Application Laid-Open No. 2007-292461

### SUMMARY OF THE INVENTION

### PROBLEM TO BE SOLVED BY THE INVENTION

In the pyroelectric infrared sensor described in patent document 1, the size of mounting area of infrared detection elements decreases when the size of substrate area is decreased in order to perform miniaturization. The sensitivity of the infrared detection sensor is proportional to a pyroelectric current generated by the temperature change of heat generation caused by received infrared rays and an element area. Therefore, there is a problem that the sensitivity of each device becomes lower and the overall sensitivity decreases when miniaturization is performed and the mounting area of infrared detection elements becomes small.

The object of the present invention is to provide an infrared detection sensor array and an infrared detection device which solve the above-mentioned problem.

### MEANS FOR SOLVING A PROBLEM

The infrared detection sensor array according to the present invention is characterized by being provided with: a substrate, at least one hole that passes through the substrate, a first infrared detection element provided to one side of the substrate and a second infrared detection element provided on the other side of the substrate so as to at least partially cover the hole.

### EFFECT OF THE INVENTION

The infrared detection sensor array and the infrared detection device according to the present invention can realize miniaturization without deteriorating the sensitivity.

### BRIEF DESCRIPTION OF THE DRAWINGS

Fig. 1 is a perspective view of an infrared detection sensor array according to a first exemplary embodiment.
Fig. 2 is a cross section of the infrared detection sensor array according to the first exemplary embodiment.
Fig. 3 is a cross section of the infrared detection sensor array according to the first exemplary embodiment.
Fig. 4 is a cross section of infrared detection in a second embodiment.
Fig. 5A is a perspective view of a sensor (1) in an embodiment.
Fig. 5B is a mosaic image which the sensor (1) has detected in the embodiment.
Fig. 6A is a perspective view of a sensor (2) in the embodiment.
Fig. 6B is a mosaic image which the sensor (2) has detected in the embodiment.
Fig. 7 is a perspective view of a sensor (3) in the embodiment.
Fig. 8 is a graph showing voltage sensitivity of the sensor (1) and the sensor (3).

### EXEMPLARY EMBODIMENTS FOR CARRYING OUT THE INVENTION

Exemplary embodiments for carrying out the present invention will be described using drawings in the following. However, although exemplary technical limitations for carrying out the present invention are applied to the exemplary embodiments described below, the scope of the invention is not limited to below.

### [First exemplary embodiment]

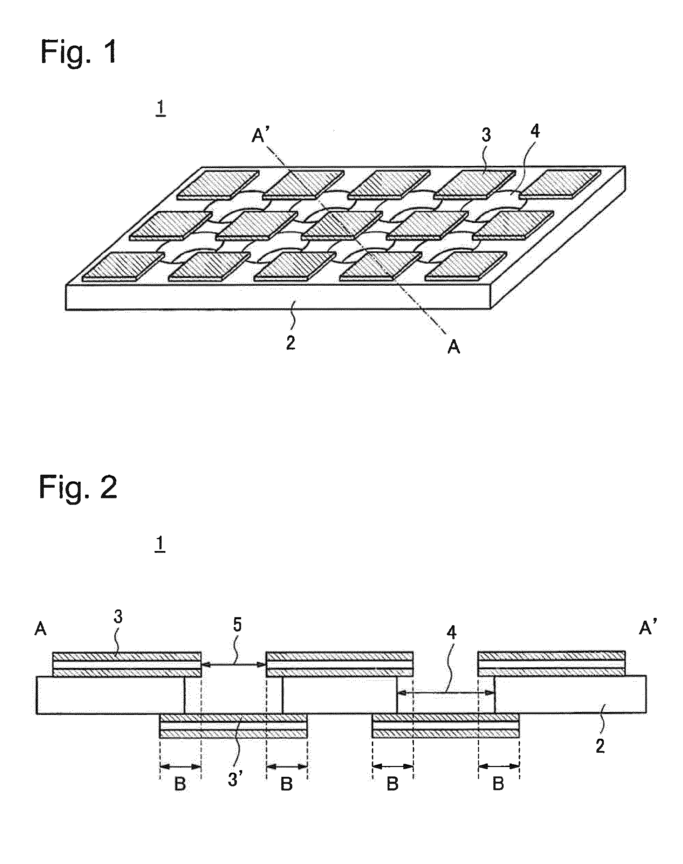

Next, the present exemplary embodiment will be described in detail with reference to drawings. Fig. 1 is a perspective view of an infrared detection sensor array 1 according to the present exemplary embodiment, and Fig. 2 is a sectional drawing at the A-A' position of Fig. 1.

### [Description of the structure]

As shown in Fig. 1, the infrared detection sensor array 1 according to the present exemplary embodiment includes a substrate 2 and an infrared detection element 3.

The substrate 2 is a planar shape and has two main surfaces. Also, the substrate 2 has a plurality of holes 4 which pass through two opposing main surfaces. Any size will be right for the dimensions of the hole 4, so long as it is large enough for electric wiring to be possible.

The infrared detection elements 3 are arranged in a grid shape on one side of the substrate 2, and the holes 4 which pass through the substrate 2 are provided between the infrared detection elements 3 in a grid shape. When viewed from the upside of the substrate 2, the infrared detection elements 3 and the holes 4 are arranged in a staggered state. As shown in Fig. 2, the infrared detection element 3 is placed by extending and partially hanging out from the edge of the hole 4. The other part of the hole 4 is an opening 5.

On the other side of the substrate 2, the infrared detection element 3' is provided so as to cover the hole 4. Because the holes 4 are being arranged in a grid shape, the infrared detection elements 3' are also arranged in a grid shape. It is desirable to make the area of the infrared detection element 3' larger than the hole 4.

The hole 4 is made smaller than the infrared detection element 3,3', and when viewed from the upside of the substrate 2, the infrared detection elements 3 and 3' are provided so that an area B where partially overlapping each other via the substrate 2 may exist. Further, the infrared detection elements 3 and 3' may be a rectangle with the same size and having the similar characteristics.

As the material of the substrate 2, a metal material (aluminum alloy, copper alloy, iron, iron alloy, titanium or titanium alloy), a resin material (epoxy, acrylic fiber, polyimide and polycarbonate) and a ceramics material (alumina, silica, magnesia or compound and complex of those) or the like can be selected and used in accordance with the desired shape and use environment.

A plurality of infrared detection elements 3 are provided on both of main surfaces of the substrate 2 respectively, and joined to the substrate 2. Further, for the sake of easy explanation, the infrared detection element provided on one side of the substrate 2 is indicated as a first infrared detection element (hereinafter, an infrared detection element 3). Similarly, the infrared detection element provided on the other side is indicated as a second infrared detection element (hereinafter, an infrared detection element 3').

However, there is no difference between the infrared detection element 3 and the infrared detection element 3' except for the allocating place. In Fig. 1, although the structure of the infrared detection elements 3 and 3' describes a rectangle and being arranged in a grid shape on the substrate 2, the arrangement and the shape are not limited in particular. Further, in Fig. 1, although the infrared detection element 3 and the hole 4 provided on the substrate 2 are arranged in a staggered state, it is not limited to this. The area B where partially overlapping the infrared detection elements 3 and 3' via the substrate 2 may be provided at least in part.

The structure of the infrared detection element 3 (the infrared detection element 3' is also included) will be described in detail. The infrared detection element 3 includes a pyroelectrics ceramics film having two main surfaces, and upper and lower electrode layers formed on the main surfaces of the pyroelectrics ceramics film. All necessary for the upper and lower electrodes is that electrical connection is possible, and it does not limit mounting, withdrawal of wiring, its material or shape. Further, for example, the thickness of more than 1µm and less than 100µm is desirable for the infrared detection element 3.

When infrared rays are applied to the pyroelectrics ceramics film, an electric charge caused by the pyroelectric effect is induced in proportion to the area of the surface according to the amount of infrared irradiation and the wavelength. And, the induced electric charge is measured as an electric signal in an electric circuit, and thereby the infrared rays are detected. In other words, when the electric charge induced in the pyroelectrics ceramics film is large, detection accuracy as a sensor can be enhanced.

The material of the pyroelectrics ceramics film is not limited in particular, and they may be lead zirconate titanate ceramics, lithium tantalate ceramics and an organic pyroelectrics material such as polyvinylidene fluorides. For example, the lead zirconate titanate ceramic material, which has a high pyroelectric coefficient and can bring out the pyroelectric effect maximally by the polarization process, is desirable.

A forming method of the pyroelectrics ceramics film to the substrate 2 is not limited in particular. For example, an aerosol deposition method which sprays ceramics particles at high speed, a solution method (sol-gel method, or the like), a gas phase method (MOCVD method, or the like), or the like can be selected and used appropriately in accordance with the material and the shape of the substrate 2.

As a different forming method of the pyroelectrics ceramics film to the substrate 2, a method in which the pyroelectrics ceramics film is prepared by a method like the tape casting process and adheres it to the substrate 2 can be used. For example, an epoxy-system adhesive can be employed to an adhesive. Although the thickness of an adhesive layer is not limited in particular, it is desirable, for example, that it is less than 20µm, because the excessive thickness causes increase of an unnecessary electrical resistance ingredient and thereby the infrared detection sensitivity deteriorates.

### [Description of the function and effect]

Next, the function and effect according to the present exemplary embodiment will be described.

The infrared detection sensor array 1 is set up so that a detection object may be arranged at one side of the substrate 2. When the infrared detection element 3 provided on one side detects infrared rays generated by the detection object, an electric charge is induced in the pyroelectrics ceramic film in proportion to the area according to the amount of infrared irradiation and the wavelength. And, it detects the infrared rays by measuring the induced electric charge as an electric signal in an electric circuit.

Here, as a comparative example, it considers a case where the infrared detection element 3 is provided on one side of the substrate 2 not having holes 4, in other words only on one surface of the substrate 2. At this time, when infrared rays are applied from one side of the substrate 2, the infrared detection element 3 induces an electric charge which is proportional to the area according to the amount of infrared irradiation and the wavelength.

Because the amount of charge induced by the infrared detection element 3 depends on the area, the induced electric charge is maximized when the infrared detection elements 3 are provided over the substrate 2 whole. However, although it can make the induced electric charge large when making the area of the substrate 2 large, the substrate 2 cannot be made large substantially from the viewpoint of miniaturization.

Accordingly, in the present exemplary embodiment, the substrate 2 has the hole 4, and on one side, at least one hole 4 is not covered with the infrared detection element 3 and has the opening 5. And, on the other side, the hole 4 having the opening 5 is covered with the infrared detection element 3'. The infrared detection element 3 and the infrared detection element 3' form the area B overlapping each other via the substrate 2.

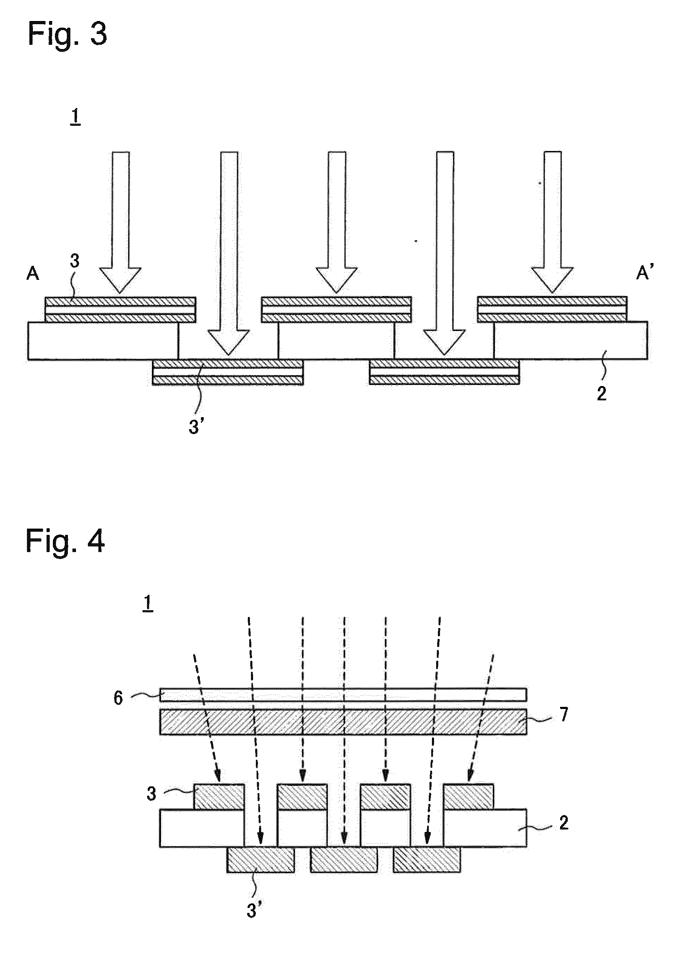

And, as shown in Fig. 3, when a detection object is arranged at one side, the infrared rays applied to the opening 5 are applied to the infrared detection element 3' passing through the hole 4. Further, the infrared detection element 3' also induces the electric charge which is proportional to the area according to the amount of infrared irradiation and the wavelength similarly.

Although the amount of charge induced by the infrared detection element 3' depends on the area, the area is not an area to which infrared rays are applied, but it depends on the whole area of the infrared detection element 3'. In other words, even if infrared rays are applied to only a part of the infrared detection element 3' via the hole 4, the induced electric charge is determined by the whole area of the infrared detection element 3'.

As indicated by an arrow B of Fig. 2, the infrared detection element 3 provided on one side of the substrate 2 and the infrared detection element 3' provided so as to cover the hole 4 on the other side form the area B where at least partially overlapping each other, in other words an opposite area.

Here, as shown in Fig. 3, when infrared rays are applied from one side of the substrate 2, the electric charge is induced by each of the infrared detection elements 3 and 3'. And, the infrared detection element 3 and the infrared detection element 3' have an overlapping area. Therefore, it results an increase of the amount of induced charge corresponding to the total area of the overlapping areas B in addition to the amount of induced charge corresponding to the area to which infrared rays are applied directly, in other words the total area of the infrared detection elements 3 arranged in a plural manner on the substrate 2 and the total area of the openings 5.

That is, the infrared detection sensor array 1 according to the present exemplary embodiment can improve the sensitivity by increasing the amounts of induced charge as many as the induced charge corresponding to the overlapping area, compared with the mounting area of the case where providing the infrared detection elements 3 only on one side.

In other words, it can realize the infrared detection sensor array 1 which is miniaturized with high-density mounting by increasing the overlapping area of the infrared detection element 3 and the infrared detection element 3' without increasing the area of the infrared detection element 3 mounted on the substrate 2.

Further, according to the present exemplary embodiment, although the hole 4 and the infrared detection element 3' are arranged between all of the infrared detection elements 3 arranged in a grid shape, each one of the hole 4 and the infrared detection element 3' may be provided as a minimum.

Further, according to the present exemplary embodiment, although the infrared detection element 3' is arranged so as to cover the hole 4, the hole 4 may have an partial opening as long as the overlapping area B can be reserved. Further, according to the present exemplary embodiment, although the shape of both of the substrate 2 and the infrared detection element 3,3' is a rectangle, it also may be a round shape or an elliptical shape. Further, the infrared detection element 3 may have a curved surface, not limited to a plane shape.

### [Second exemplary embodiment]

Next, a second exemplary embodiment will be described in detail with reference to Fig. 4. Fig. 4 is a cross section of an infrared detection sensor array 1 according to the present exemplary embodiment.

### [Description of the structure]

As shown in Fig. 4, the infrared detection sensor array 1 according to the present exemplary embodiment includes an infrared filter 6 and an diffraction optical element 7. The other structure and connection relationship are same as those of the first exemplary embodiment, and the substrate 2, the infrared detection element 3, the hole 4 and the opening 5 are provided.

The infrared filter 6 and the diffraction optical element 7 are installed above one side of the substrate 2. And, the infrared filter 6 and the diffraction optical element 7 are facing the substrate 2 respectively. Further, the infrared filter 6 and the diffraction optical element 7 are installed so as to at least partially cover the infrared detection elements 3 provided on the substrate 2.

The infrared filter 6 has the function to transmit only infrared rays, that is the light having the wavelength more than 780nm, and to shut out visible light. Further, the diffraction optical element 7 has the function to concentrate transmitted light.

### [Description of the function and effect]

Next, the function and effect according to the present exemplary embodiment will be described.

When infrared rays are detected, the infrared detection element 3 induces an electric charge which is proportional to the area according to the radiant quantity and the wavelength. According to the present exemplary embodiment, the infrared filter 6 is installed above one side of the substrate 2, in other words above the side where the infrared detection elements 3 are provided. By the aforementioned structure, infrared rays generated from a detection object can be detected efficiently because visible light besides the infrared rays can be shut down.

Further, the present exemplary embodiment installs the diffraction optical element 7 on the infrared filter 6, in other words an opposite side of the infrared filter 6 to the side where the substrate 2 is installed. Because the diffraction optical element 7 has the function to concentrate transmitted light, the infrared detection element 3 can detect infrared rays of the detection object with a wide viewing angle.

### [Embodiment]

Next, an embodiment will be described in detail with reference to drawings.

Characteristic evaluation of the infrared detection sensor array 1 according to the present embodiment was carried out using three kinds of sensors (1)-(3) whose details being described in the following. The sensors (1)-(3) will be described in detail below.

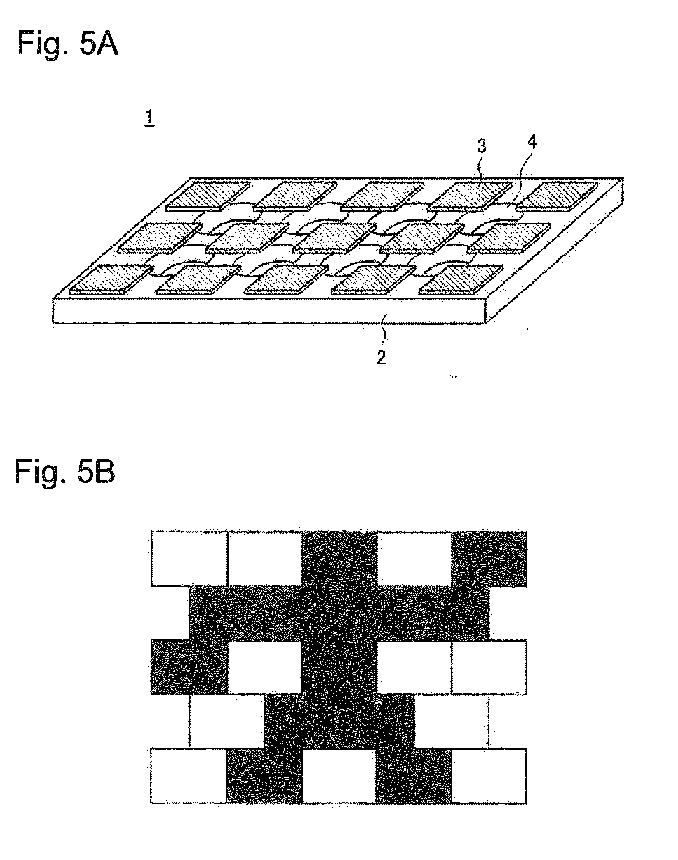

As shown in Fig. 5A, a sensor (1) has the structure, similar to the first exemplary embodiment, that the infrared detection elements 3 are arranged on the surface (one side) of the substrate 2 having holes 4. And, the infrared detection element 3 provided on at least one hole 4 has an opening 5, and in other words, at least one hole 4 is not covered with the infrared detection element 3 on the surface.

The hole 4 having the above-mentioned opening 5 is covered with the infrared detection element 3' on the back surface (the other side), and the infrared detection elements 3 provided on the surface and the back surface form an area where partially overlapping each other.

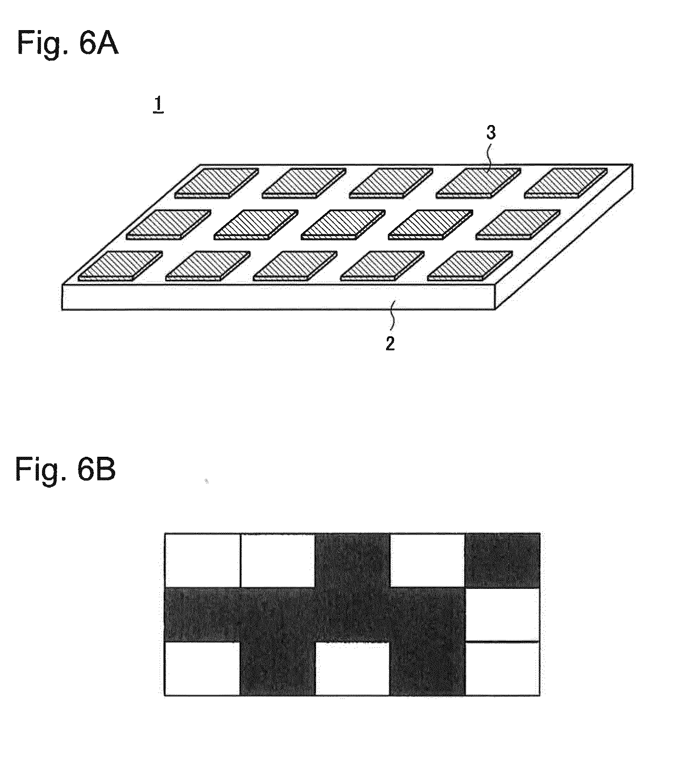

Fig. 6A indicates a sensor (2) as a comparative example. This sensor (2) has a substrate 2 without a hole 4, and has the structure that the infrared detection elements 3 are provided only on the surface (one side). Further, the total area of the infrared detection elements 3 arranged on the surface of the substrate 2 of the sensor (2) is the same as the sensor (1).

When compared with the sensor (1), the sensor (2) is provided with the infrared detection elements 3 by the same arrangement on the surface of the substrate 2. However, in a portion where the hole 4 exists, the sensor (1) is provided with the infrared detection element 3' on the back surface. Therefore, even if the sensor (2) is provided with the infrared detection element 3 in a portion of the hole 4 on the surface of the substrate 2, the sensor (1) can make the area of the infrared detection elements 3 larger than the sensor (2) as much as the area where the infrared detection elements 3 and 3' provided on the surface are overlapping.

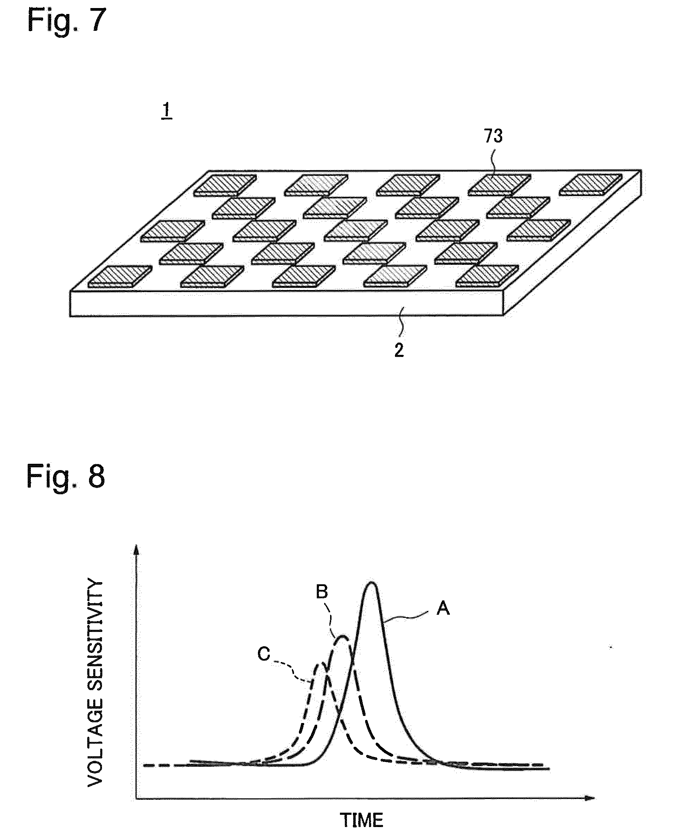

Fig. 7 indicates a sensor (3) as a comparative example different from Fig. 6. This sensor (3) has a substrate 2 without a hole 4, and has the structure that the infrared detection elements 73 are provided only on the surface (one side). Further, on the surface of the substrate which has the same mounting area as the sensor (1), the sensor (3) has the same number of infrared detection elements 73 as the number provided on both sides of the substrate 2 of the sensor (1).

When compared with the sensor (1), the sensor (3) mounts twenty-three infrared detection elements 73, which is the total number in the sensor (1) of fifteen infrared detection elements 3 provided to one side of the substrate 2 and eight infrared detection elements 3' provided to the other side of the substrate 2, in the same mounting area of the surface of the substrate 2. Therefore, it is small in area of the respective infrared detection elements 73 compared with the infrared detection element 3 which composes the sensor (1).

Further, for the sensors (1)-(3), the substrate 2 having the same mounting area was used, the same thing concerning the substrate 2 was used and the infrared detection element 3 having the same characteristic was used. Further, with respect to a power supply to be used, the same electric power was supplied, and the operation was carried out under the identical operating environment.

Further, as for the infrared detection element 3, it used a thing having an electrode layer of 5µm of thickness formed on an upper and lower side of the pyroelectrics ceramics film having a shape of 5mm by 5mm square and 15µm of thickness. Further, as for the substrate 2, it used an MgO substrate having a shape of 45mm by 30mm rectangular and 100µm (0.05mm) of thickness. Further, as for the substrate having holes 4, a hole 4 of a diameter 3mm was made.

As for a pyroelectrics ceramics film of the infrared detection element 3, it used a lead zirconate titanate ceramic, and silver/palladium alloy (weight ratio 70%:30%) was used as for the electrode layer. Further, the material with the low thermal conductivity was inserted between the elements on the back surface and the substrate.

### [Comparison 1]

First, as comparison 1, the sensor (1) and the sensor (2) were compared.

Fig. 5A shows a perspective view of the sensor (1), and Fig. 5B shows an mosaic image of the electric signal which the infrared detection elements 3 of the sensor (1) have detected. Further, Fig. 6A shows a perspective view of the sensor (2), and Fig. 6B shows a mosaic image of the electric signal which the infrared detection elements 3 of the sensor (2) have detected.

Although the sensor (1) and the sensor (2) are arranging the infrared detection elements 3 in the same way, the sensor (1) is provided with the infrared detection element 3' on the back surface of the substrate 2 in a portion where the hole 4 exists. And, at least part of the infrared detection element 3' installed on the back surface has an area where overlapping with the infrared detection element 3 provided on the surface.

The amount of charge induced by the infrared detection elements 3 depends on the size of area. Therefore, the sensor (1) can increase the amount of induced charge compared with the sensor (2) as much as the size of the area where the infrared detection element 3 and the infrared detection element 3' provide on both sides of the substrate 2 are overlapping. As a result, the sensor (1) can indicate a finer image.

### [Comparison 2]

Next, as comparison 2, the sensor (1) and the sensor (3) were compared.

Fig. 8 shows the voltage sensitivity detected by the infrared detection elements 3 of the sensor (1) and the sensor (3). When described more in detail, A, B and C indicate the respective voltage sensitivity wherein A corresponds to the detected one by the infrared detection elements 3 provided on the surface of the substrate 2 of the sensor (1), B corresponds to the detected one by the infrared detection elements 3' provided on the back surface of the substrate 2 of the sensor (1), and C corresponds to the detected one by the infrared detection elements 73 provided on the surface of the substrate 2 of the sensor (3).

The number of the infrared detection elements 3 provided on the substrate 2 is same for the sensor (1) and the sensor (3). However, the sensor (3) installs the same number of infrared elements 3 on the surface of the substrate 2 as the number provided on both sides of the surface and the back surface of the sensor (1). Therefore, the size of the respective infrared detection elements 3 is small compared with the sensor (1).

As shown in Fig. 8, the voltage sensitivity A detected by the infrared detection elements 3 on the surface of the substrate 2 can realize higher voltage sensitivity because the sensitivity area per one element can be made large, although the mounted number is small compared with the sensor (3).

Further, with respect to the voltage sensitivity B detected by the infrared detection elements 3 on the back surface of the substrate 2, it is small in area that receives infrared rays. However, high voltage sensitivity can be realized because the electric charge can be induced by whole infrared detection element 3' provided on the back surface of the substrate 2 due to element heat conduction from the portion where receiving light.

On the other hand, the sensor (3) installed on the surface of the substrate 2 can install many infrared detection elements 3 because it is provided with the infrared detection elements 3 which are provided on the surface and the back surface of the sensor (1). However, it needs to make small in area of each infrared detection element 3. As a result, with respect to the voltage sensitivity C, the amount of induced charge is small, and high voltage sensitivity cannot be realized.

As a result of the above-mentioned comparison, the infrared detection sensor array 1 according to the first exemplary embodiment can realize more high sensitive detection because it can obtain the voltage sensitivity A and B.

Incidentally, when the infrared detection sensor array 1 according to the present exemplary embodiment is used as a body detection sensor which detects movement of a human body, a sensor for human body detection considering privacy can be realized. As shown in Fig. 5B, a mosaic image can be taken out from the arranged infrared detection elements 3 by use of an appropriate signal amplifier circuit and a signal processing circuit.

The received amount of infrared lays of each infrared detection element 3 fluctuates according to the movement of a human body. An infrared detection device equipped with the sensor for human body detection considering privacy can be realized because the infrared detection elements 3 arranged in an array shape can detect the movement of a human body by analyzing time variation data, further, it is impossible for mosaic data to identify a person.

While the present invention has been described in conformity with the above-mentioned exemplary embodiments and embodiment above, the present invention is not limited to the above-mentioned exemplary embodiments and embodiment. Various changes and modification in form and details of the present invention which can be understood by those skilled in the art may be made therein without departing from the spirit and scope of the present invention.

Further, this application claims priority from Japanese Patent Application No. 2011-033256, filed on February 18, 2011, the contents of which are incorporation herein by reference in their entirety.

### DESCRIPTION OF THE REFERENCE NUMERALS

- 1: first conductor
- 1: infrared detection sensor array
- 2: substrate
- 3: infrared detection element
- 4: hole
- 5: opening
- 6: infrared filter
- 7: diffraction optical element
- 73: infrared detection element

## Claims

1. An infrared detection sensor array comprising:
a substrate;
at least one hole that passes through the substrate;
a first infrared detection element provided to one side of the substrate; and
a second infrared detection element provided on the other side of the substrate so as to at least partially cover the hole.

2. The infrared detection sensor array according to claim 1, wherein said first infrared detection element provided to said one side and said second infrared detection element provided to the other side have an area where at least partially overlapping each other via said substrate.

3. The infrared detection sensor array according to claim 1 or 2, wherein said second infrared detection element on the other side that covers said hole is larger than an area of said hole.

4. The infrared detection sensor array according to claims 1 to 3, wherein said first infrared detection element and said second infrared detection element are arranged in a grid shape.

5. The infrared detection sensor array according to claims 1 to 4, wherein said hole has an opening which is not covered with said first infrared detection element on one side of said substrate.

6. The infrared detection sensor array according to claims 1 to 3, wherein said infrared detection element includes a pyroelectrics ceramics film and an electrode, and
wherein said pyroelectrics ceramics film induces an electric charge according to an area of the surface.

7. The infrared detection sensor array according to claims 1 to 4, wherein an infrared filter and a diffraction optical element are provided above one side of said substrate, and
wherein said infrared filter and said diffraction optical element are provided by facing said substrate.

8. The infrared detection sensor array according to claims 1 to 7, wherein said pyroelectrics ceramics film includes any one of lead zirconate titanate ceramics, lithium tantalate ceramics and polyvinylidene fluorides.

9. An infrared detection device comprising: a human body detection sensor which detects movement of a human body by an infrared detection sensor array according to claims 1 to 8.
